**Europäisches Patentamt**

(19) **European Patent Office**

**Office européen des brevets**

(11) **EP 0 605 559 B1**

(12) # EUROPEAN PATENT SPECIFICATION

(45) Date of publication and mention
of the grant of the patent:
**07.02.1996 Bulletin 1996/06**

(21) Application number: **92920266.1**

(22) Date of filing: **18.09.1992**

(51) Int. Cl.$^6$: **B60T 8/48**, B60T 8/62,
B60K 28/16

(86) International application number: **PCT/US92/07975**

(87) International publication number: **WO 93/07037**
**(15.04.1993 Gazette 1993/10)**

(54) **METHOD AND APPARATUS FOR CONTROLLING DIFFERENTIALLY DRIVEN WHEEL SLIP FOR AN ARTICULATED VEHICLE**

VERFAHREN UND GERÄT ZUR ANTRIEBSSCHLUPFSTEUERUNG EINES GELENKKRAFTFAHRZEUGES

PROCEDE ET APPAREIL PERMETTANT DE CONTROLLER LE PATINAGE A DES VITESSES DIFFERENTES DES ROUES MORTICES D'UN VEHICULE ARTICULE TOURNANT

(84) Designated Contracting States:
**DE FR IT SE**

(30) Priority: **04.10.1991 WO PCT/US91/07312**

(43) Date of publication of application:
**13.07.1994 Bulletin 1994/28**

(73) Proprietor: **CATERPILLAR INC.**
**Peoria Illinois 61629-6490 (US)**

(72) Inventors:
 • **HOSSEINI, Javad**
  **Edelstein, IL 61526 (US)**

 • **RYTTER, Noel, Joy**
  **Dunlap, IL 61525 (US)**
 • **VERHEYEN, Andrew, Gerard**
  **Est Peoria, IL 61611 (US)**

(74) Representative: **Brunner, Michael John**
  **London EC2M 7LH (GB)**

(56) References cited:
  **WO-A-85/05083**   **US-A- 4 402 377**
  **US-A- 4 947 956**

## Description

This invention relates generally to wheel slip control systems for vehicles having differentially driven wheels, and more particularly, to an apparatus and method for controlling wheel slip for articulated vehicles in which slip is controlled by application of a braking force to the slipping wheel.

Vehicles used in construction sites and other off-road locations generally experience loss of traction. Moreover, four wheel drive vehicles used in these locations also experience traction loss. For example, slipping occurs to either the front wheels or rear wheels, or to all four wheels.

For example, a vehicle typically used on construction sites is a wheel loader. Wheel loaders commonly have four driven wheels and are often articulated. As is well known, an articulated vehicle includes front and rear body parts hinged together by an articulation joint for relative movement about a horizontal axis. Each body part includes a wheel set. When one of the body parts move relative to the other the vehicle turns. During normal operation a wheel loader will experience wheel slip to all four wheels, especially when loading.

To alleviate such problems, various mechanical anti-spin methods have been developed and placed in commercial use. Such methods have been proven to have various problems, especially during cornering of a vehicle. For example, one method to prevent front or rear wheel slip is by locking the differentials. However, since the differential operation is restrained, cornering ability is greatly deteriorated.

An alternative approach involves the provision of separately actuatable drive wheel brakes. An operator selectively applies a braking force to the spinning or slipping wheel, and effects a balancing of power through the differential mechanism. The application of the braking force to the slipping wheel simulates increased traction and results in a more even distribution of power between the differentially driven wheels. This approach is commonly used on farm vehicles.

The document WO 85/05083 (Caterpillar) describes a traction control system whereby slip signals are adapted according to steering angle to negate the effects of steering on the slip signals.

However, one problem not addressed in preventing wheel slip is accounting for the articulation angle (the angle representing the relative movement of one body part to the other). The relative movement of one body part to the other provides for vehicle cornering. When cornering the rotational velocities between the vehicle's radially inner and outer wheels are different; consequently, the radially outer wheels have a faster rotational velocity than the radially inner wheels.

Some methods fail to accommodate the normal wheel speed differential which arises during the vehicle cornering. For example, when the vehicle is cornering such methods may brake the faster rotating wheel (radially outer wheel) causing excessive tire wear due to the radially outer wheel or wheels dragging.

Other methods may drive only the slower wheel in a turn, making the vehicle hard to steer and applying excessive torque to the wheel being driven, often causing failure of the final drive.

The present invention is directed to overcoming one or more of the problems as set forth above.

In one aspect of the present invention, an anti-spin apparatus for a vehicle is disclosed. The vehicle is articulated and has at least one axle set with at least two driven wheels. The anti-spin apparatus includes braking mechanisms which controllably apply braking forces to each of the driven wheels. A controller produces a slip signal having a value responsive to the difference in rotational velocity between the wheels of the axle set. A transducer produces an articulation signal having a value responsive to the angle of articulation of the vehicle. Further, a microprocessor receives the slip signal and the articulation signal, controllably modifies the slip signal in response to the value of the articulation signal. The microprocessor then compares the modified slip signal with a first predetermined reference value, and produces a braking control signal in response to the modified slip signal value exceeding the first predetermined reference value. Finally, one of the braking mechanisms receives the braking control signal and controllably applies the braking forces to the faster rotating wheel in response to the received signal.

For a better understanding of the present invention, reference may be made to the accompanying drawings in which:

FIG. 1 is a diagram of a vehicle drive system including an anti slip control in accordance with the present invention;

FIG. 2 is a block diagram of the electronic circuitry associated with the present invention;

FIG. 3 is a functional flow diagram of one embodiment utilized in conjunction with the circuitry of FIG. 2;

FIG. 4 is a graphical representation utilized in describing the operation of the one embodiment of FIG. 3;

FIG. 5 is a functional flow diagram of a second embodiment utilized in conjunction with the circuitry of FIG. 2;

FIG. 6 is a block diagram of the feedback portion associated with the second embodiment of the present invention;

FIG. 7 is a functional flow diagram of an energy management scheme associated with the second embodiment of the present invention;

FIG. 8 is a graph representing an increasing magnitude of a braking control signal with respect to time, the braking control signal being associated with the second embodiment of the present invention; and

FIG. 9 is a graph representing a decreasing magnitude of a braking control signal with respect to braking force, the braking control signal being associated with the second embodiment of the present invention.

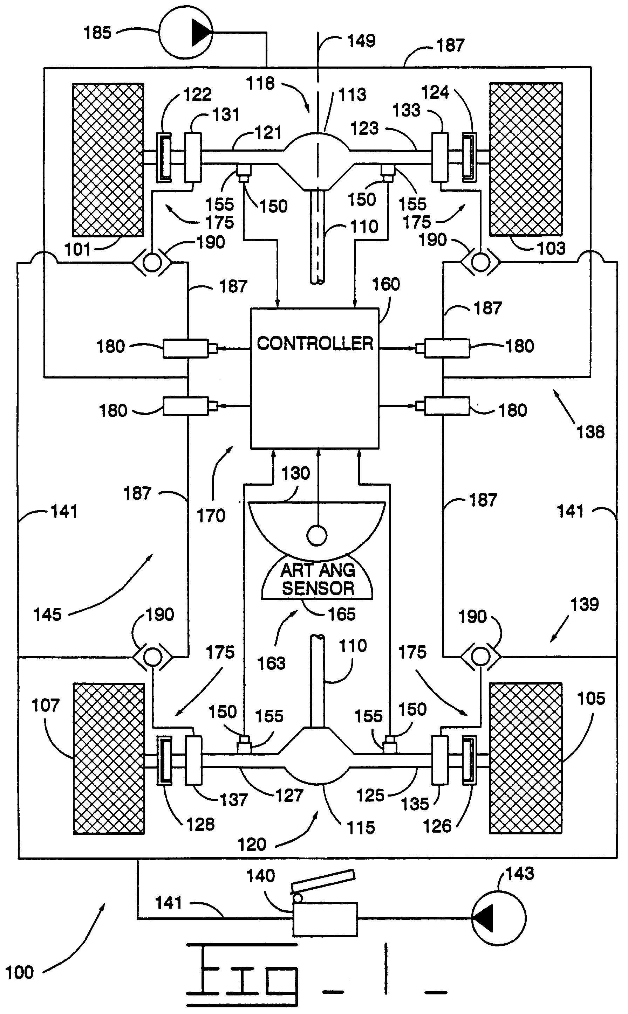

Referring first to FIG. 1, an anti-slip apparatus 100 embodying certain principles of the present invention is illustrated. Wheels 101,103,105,107 are driven by an engine (not shown) through an input or drive shaft 110, respective differential mechanisms 113,115 and respective axle sets 118,120 which include half-axles 121,123,125,127 and final drive assemblies 122,124,126,128, respectively. The axle sets 118,129 also include braking mechanisms 131,133,135,137 connected between the respective differentials and final drive assemblies. The axle set may have "inboard" or "outboard" brake and final drive assemblies. For example and as shown in FIG. 1, the outboard assembly includes the braking mechanism and the final drive assembly in close proximity to the wheel with the half-axle connected between the differential and the braking mechanism. Alternatively, the inboard assembly (not shown) includes the braking mechanism and final drive in close proximity to the differential with the half-axle connected between the final drive and the wheel. The drive systems disclosed are conventional and no further details need be disclosed for an understanding of the present invention.

The vehicle is articulated and includes front and rear wheeled sections 138,139 hinged together by an articulation joint or mechanism 130 for relative movement about an horizontal axis 149, thus enabling the vehicle to be steered.

The wheels 101,103,105,107 are stopped by hydraulically engaged service brake pistons, of braking mechanisms 131,133,135,137 connected between the respective differentials and final drive assemblies. The brakes may be spring-biased in the engaged position and maintained in the disengaged position by application of fluid pressure. Alternatively, the brakes may also be maintained in the engaged position by the application of fluid pressure and spring-biased in the disengaged position. The method of engaging the brakes will vary from vehicle to vehicle and is not critical to the present invention. The service brakes are normally actuated by a brake pedal 140 via a service brake line 141 connected to the service brake and retarder master cylinders (not shown). The fluid is pressurized and is supplied by the service pump 143. The service brake system is well known and does not form a part of this invention.

Means 145 produces a slip signal having a value responsive to the difference in rotational velocity between the wheels of each axle set. As shown and in the case of the outboard axle design, the slip signal producing means 145 includes a wheel speed pickup in the form of a Hall effect device 150 which provides pulses in cooperation with a gear-like device 155. The device 155 is mounted on each axle portion 121,123,125,127. Alternately, in the case of the inboard axle design (not shown), the transducer 150 is mounted on the braking mechanism and the device 155 is machined into the circumference of a brake disk and rotates therewith. In either case, the signals from the transducer 150 are applied to one input of an electronic controller 160, the details of which are described below.

Each transducer 150 produces respective signals having values responsive to the rotational speed or velocity of the wheels 101,103,105,107. All the wheel speed signals for each wheel 101,103,105,107 are provided in a similar manner. Moreover, the wheel speed signals for each wheel are applied to an input of the electronic controller 160. For example, each transducer 150 is preferably an Hall effect device. The transducer 150 produces a pulse-type, time variable output voltage. Such transducers are well known in the art. However, other transducers, such as optical and electromagnetic devices, may be employed as alternatives.

Means 163 produces an articulation signal having a value responsive to the angle of articulation of the vehicle. Means 163 preferably includes a potentiometer 165 controllably connected to the articulation mechanism 130. The output of the potentiometer 165 is a signal that is pulse width modulated in response to the position of the articulation mechanism 130. For example, the potentiometer 165 is adapted to measure 100 radial degrees. Other suitable angular position transducers may be substituted for the potentiometer 165 in the means 163, as is well known in the art.

The electronic controller 160 is part of a control means 170 which receives the slip signal and the articulation signal. The control means 170 controllably modifies the slip signal in response to the value of the articulation signal. Advantageously, the control means 170 compares the modified slip signal with a first predetermined reference value and produces a braking control signal in response to the modified slip signal value exceeding the first predetermined reference value. A braking means 175 controllably applies braking forces to each of the driven wheels 101,103,105,107. More particularly, the braking means 175 receives the braking control signal and controllably operates the braking mechanisms 131,133,135,137 in response to the received braking control signal.

The controller 160 operates upon the signal inputs, determines the existence, magnitude, and location of wheel slip during a loss of traction situation, and distinguishes between true wheel slip and a transducer failure. In response to detecting a true slip condition, the power transfer between two differentially driven wheels is balanced by applying a proportional braking force to the wheel which loses traction, i.e. the faster rotating wheel. This is accomplished with the braking means 175, and more particularly, the selection of electrohydraulic control valves 180.

The electrohydraulic control valves 180 operate in combination with a supply pump 185, which may be part of the service pump 143. The supply pump 185 supplies pressurized oil or brake fluid. Fluid lines 187 from the pump 185 run through the hydraulic valves 180 and check valves 190 directing pressure to one of the braking mechanisms 131,133,135,137 under modulated or proportionally controlled pressure. The check valves 190 are ball-type check valves and the electrohydraulic brake valves are solenoid operated three-way valves; both types of valves are well known in the art and will not be further discussed.

FIG. 2 is a block diagram of the anti-spin apparatus 100 described above. A microprocessor 205 performs system control functions. The microprocessor 205 is supplied by Motorola as Part No. 68HC11, for example. However another microprocessor such as Motorola's No. 6809, may be substituted as one skilled in the art can readily appreciate. Transducers 150 which supply the wheel speed signals are connected to the microprocessor 205 through an input conditioning circuit 210. The input circuit 210 provides appropriately digitized input signals to the microprocessor 205. The articulation angle sensor 165 is connected to a low pass filter 213 through an A/D converter 215 to the microprocessor 205.

A first output of the microprocessor 205 is connected through a pulse-width modulated servo valve driver 220 associated with each electrohydraulic control valve 180. The pulse-width modulated servo valve drivers 220 receive the braking control signal produced by the microprocessor 205 and proportionally controls the respective electrohydraulic valves 180 in response to the braking control signal. The duty cycle of the braking control signal varies in response to the slip signal. Advantageously, the applied braking forces are modulated in response to the modulation or duty cycle of the braking control signal. For example, the microprocessor 205 controls the energization of the electrohydraulic brake valves 180 via the braking control signal providing pressurized fluid to the respective service brakes.

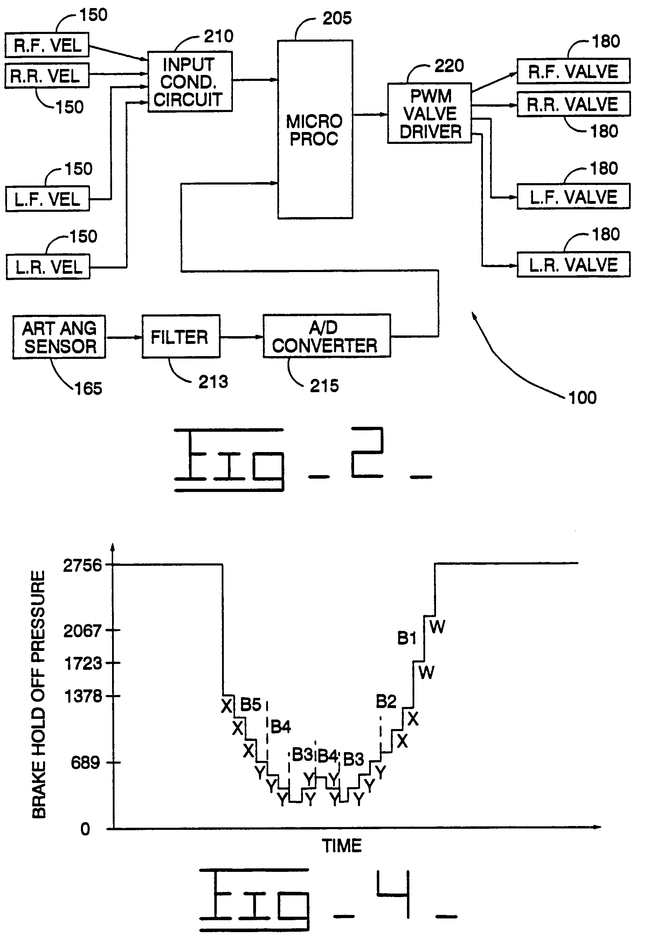

The following discussion refers to FIGs. 1, 2, and 4, and to the flowchart depicted in FIG. 3. The flowchart depicted in Fig. 3 illustrates the first embodiment of the present invention. Note that in this discussion, the brakes are spring biased - the brake pressure is the inverse of fluid pressure. However, as stated earlier this could be easily be implemented in the opposite fashion, increasing brake pressure in direct rather than inverse ratio to the applied fluid pressure.

TABLE 1

| Band 1: | 1.0 < Slip Signal Value < 1.5 |
|---|---|
| Band 2: | 1.5 < Slip Signal Value < 2.0 |
| Band 3: | 2.0 < Slip Signal Value < 2.5 |
| Band 4: | 2.5 < Slip Signal Value < 3.0 |
| Band 5: | 3.0 < Slip Signal Value |

Referring now to FIG. 3, a functional flow chart defining the internal programming for the microprocessor 205 is shown. Advantageously, the microprocessor 205 is programmed to establish a plurality of slip reference bands, each band having associated therewith an applied brake force value expressed in terms of fluid pressure. From this flow chart, a programmer of ordinary skill can develop a specific set of program instructions for a general purpose microprocessor that defines the necessary slip reference bands, timing cycles, and brake fluid pressure values necessary for implementation of the instant invention. It will be appreciated that, while the best mode in the invention is considered to comprise a properly programmed microprocessor, the result of which is a creation of novel hardware associations within the microprocessor 205 and its associated devices, it is possible to implement the instant invention utilizing traditional hard wired circuits.

Data delivered by the transducers 150, indicative of the four wheel speeds, are sampled in block 300 of FIG. 3. Control then passes to block 305 where the sum of the half-axle speeds of one axle set 118 is compared to the sum of the half-axle speeds of the other axle set 120. An inequality within a predetermined tolerance range indicates that a sensor or sensor circuit has failed, since both axle sets 118,120 are directly connected via the respective differentials 113,115 to the drive shaft 110. As a matter of convenience and for purposes of this discussion, a differential ratio of 1:1 is assumed throughout. In the case of inequality, the program terminates and, if desired, an indication of the apparent transducer failure can be presented to the operator. Otherwise control then passes to block 310.

In block 310, the slip signal is generated from the wheel speed signals produced by the transducers 150. Each axle set 118,120 has a slip signal value. For example, the slip signal is defined as the ratio of the rotational velocity of one wheel to the rotational velocity of the other wheel for each axle set 118,120. The value of the slip signal has one of three possible values; less than 1, 1, and greater than 1. A slip signal value of 1 represents that each wheel associated with a respective axle set is rotating at an identical velocity. A slip signal value not equal to 1 represents that one wheel is rotating faster than the other for a respective axle set. For example, a ratio less than 1 may represent that the left wheel is rotating faster than the right wheel for a respective axle set. Alternatively, a ratio greater than 1 may represent that the right wheel is rotating faster than the left wheel for a respective axle set, for example. Note that the rotational velocity for each wheel of each axle set 118,120 is calculated independently of the other.

Next, control then passes to block 315 where data produced by the articulation sensor 165 is sampled. If the data delivered by the articulation sensor 165 represents that the vehicle is articulated, then control passes to block 320, otherwise, control passes to block 325.

In the block 320, the slip signal value is modified according to the following formula:

$$z = (0.5 / x) * y$$

where x is the maximum amount of articulation for the vehicle, 35° for example, and y is the amount of articulation in degree measure which is represented by the value of the articulation signal. The quantity z is either added or subtracted to the slip signal value. The values shown in this formula are for exemplary purposes only and the values may be readily changed by the artisan depending on the application of the vehicle and the resolution of the articulation sensor 165.

To best illustrate how the slip signal value is modified, the following examples are discussed. Since normal cornering of the vehicle (i.e. an articulation signal not being equal to zero) produces an apparent slip condition, with the radially outer wheels of the vehicle rotating faster than the radially inner wheels, the control means 170 adjusts or modifies the slip signal value to prevent actuation of the anti-slip control in response to maneuvering the vehicle. For example, if the outside rotating wheel is found to rotate faster than the inside rotating wheel for a respective axle set then the microprocessor 205 reduces the slip signal for that axle set by subtracting the quantity, z, from the slip signal value. Alternatively, if the inside wheel is rotating faster than the outside wheel, then the microprocessor 205 increases the slip signal for the respective axle set by adding the quantity, z, to the slip signal value.

Block 325 represents a calculation subroutine. Essentially, the control means 170 determines the location of the slip signal value with one of the five bands represented by Table 1. The slip reference bands are contiguous, the upper limit of one band being the lower limit of the next, with the highest band being the first predetermined reference value referred to above. The first predetermined reference value must be exceeded by the slip signal value before anti slip control begins. The control means 170, and more particularly, the microprocessor 205 makes this determination by comparing the slip signal value with the first predetermined reference value, and with the other reference values shown in Table 1. The values shown in Table 1 are for illustrative purposes only and it is apparent that one skilled in the art may deviate from the values given, based on the application of the vehicle.

Block 330 determines if the slip signal value is greater than the first predetermined value; signified by band 5, the most severe slip condition band. If so, control then transfers to block 335, otherwise the control returns to block 300.

In block 335, the microprocessor 205 calculates the brake pressure level. Block 335 increases the wheel brake force by determining the wheel brake hold-off pressure by an increment X, for each timed interval established by the microprocessor 205. Initially, the vehicle can enter the slip control only via band 5. Therefore, the slip signal value must exceed the first predetermined reference value, for example 3.0. Once the slip control has been entered through band 5, control is exited by sequencing through the lower bands 4-1, producing a smooth transition back to the uncontrolled mode.

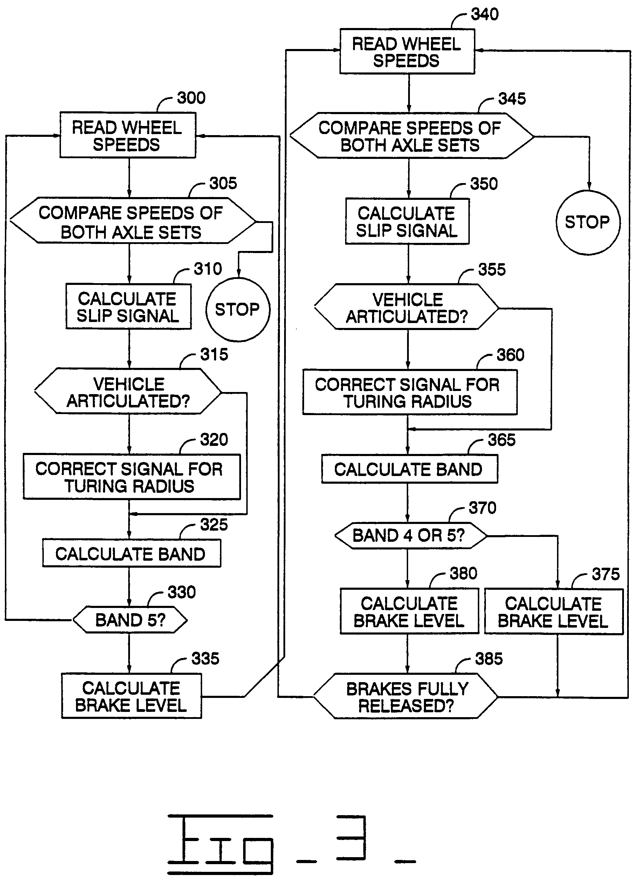

Assuming that band 5 is entered, the brake force is periodically incremented by reducing the brake pressure by the increment X for every timing cycle, until the slip signal value causes entry into another slip band. This is best seen in FIG. 4, where the first step from the hold off pressure of 2756 KPa represents an abrupt reduction in pressure to 1378 KPa, followed by three additional incremental reductions of approximately 229 KPa each, increasing the brake force through spring action with each incremental step.

Next, the slip condition in the example represented in FIG. 4 enters band 4, in which the slip has been reduced to the point where the slip signal value is within the range between 2.5 and 3.0. Accordingly, the system approaches the full brake force condition and a gradual curve, but the brake force increments becoming smaller toward the full brake force condition.

As is also represented in FIG. 4, reaching a lower band value and qualifying for successive entry into slip bands 3, 2, 1, causes gradual increasing incremental reductions in brake force until the system is back to an unbrake condition represented by application of the brake fluid pressure of 2756 KPa. Preferably, band 3 is a mirror image of band 4, and causes incremental reductions in braking force through incremental increases in brake fluid pressure. Band 2 is a mirror image of band 5, and causes large incremental reductions in brake force. Band 1 has no counterpart, and causes still larger reductions in brake force as represented by the increment W in the diagram of FIG. 4. The values shown in FIG. 4 are for illustrative purposes only and can be readily changed by one skilled in the art depending upon the vehicle application.

To further illustrate the above description and referring to FIG. 4, control passes to block 340. Block 340 is essentially similar to block 300 where the wheel speed signals are sampled. Additionally, control blocks 340, 345, 350, 355, 360, and 365 are similar to what was earlier presented and the operation of each will not be discussed. However, the essence of blocks 340-365 enable the control to periodically query the slip signal and consequently modify the slip signal as needed. To continue the smooth transition from band 5 to the lower bands, the control continues to block 370 determining if the slip signal value corresponds to either band 4 or band 5. If so, control passes to block 375 where the microprocessor 205 calculates the brake level corresponding to FIG. 4, otherwise, control passes to block 380. In block 380 the brake level is calculated for either bands 2 or bands 3, and consequently, the brake force pressure is increased. Block 385 determines if the brakes are fully released or if the pressure is 2756 KPa.

From the foregoing it is apparent that the anti-spin apparatus operates to detect a slipping wheel, to apply braking force to the slipping wheel, and to periodically and incrementally modulate the braking force either positively or negatively in accordance with the degree of slip which is detected by the system. Conditions giving rise to a slip signal value of 3.0 or less do not cause entry into the slip control mode, because the first predetermined reference value is not exceeded. This prevents unintentional operation of the slip control.

It will be evident to those skilled in the art to delay certain portions of the control within the control algorithm disclosed in FIG. 3. For example, a delay may filter out short term wheel slip aberrations. However, this is not critical to the present invention.

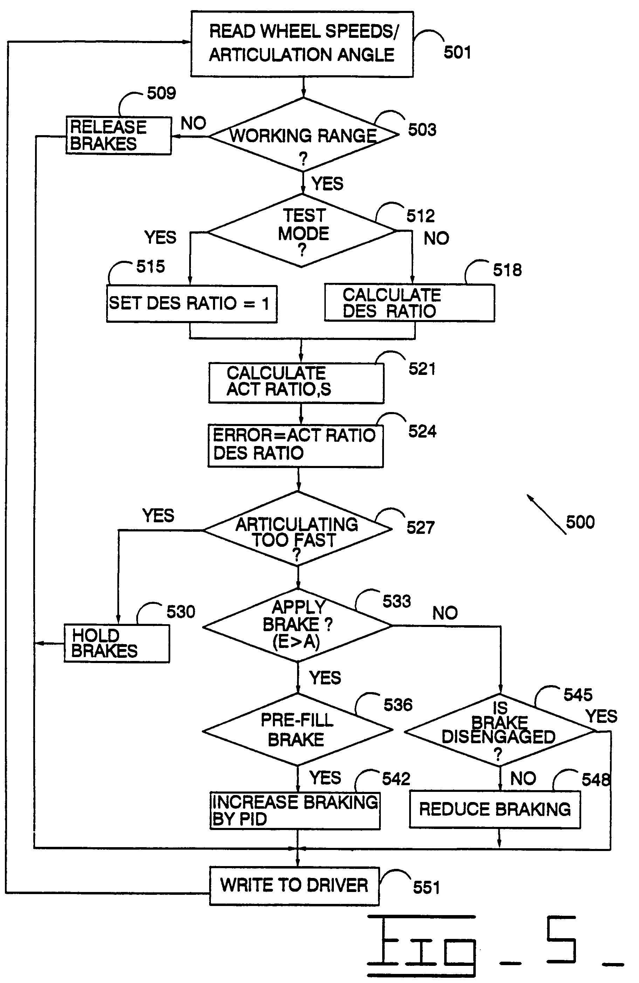

The discussion starting with FIG. 5 is directed toward a second embodiment of the present invention. Note that in this discussion, the braking force is proportional to the fluid pressure. FIG. 5 depicts a flowchart illustrating a computer software program for implementing the second embodiment of the present invention.

The flowchart of FIG. 5, generally shown at 500, illustrates the manner in which the second embodiment of the present invention controls the wheel slip of the vehicle. It should be noted that the front and rear wheel sets are controlled independent to one another. Thus, Fig. 5 represents the control of one wheel set - the other wheel set will have an identical flow chart. Further, the wheel slip or anti slip control regulates the wheel slip of the vehicle on a real-time basis. It should be noted that the values illustrated herein are for exemplary purposes only. It will be apparent to those skilled in the art that any of the illustrated values may be modified depending upon the desired effects.

For the purposes of discussion, the term "inner wheel" represents the inside turning wheel and "outer wheel" represents the outside turning wheel. If the vehicle is not turning, then the inner wheel represents the left wheel, while the outer wheel represents the right wheel.

Control begins with reference to block 501 where the individual wheel speeds and vehicle articulation angle are sampled. As apparent from the flowchart, the wheel speeds and vehicle articulation angle are sampled on each control loop. As described below, the control is continually adjusting the braking forces in response to the changing vehicle parameters. After the vehicle parameters have been sampled, the control passes to block 503 to determine if the wheel speeds are beyond the working range of the wheel slip control. For example, the lower limit of the working range is exceeded when each wheel rotates less than 1.8 km/hr. The upper limit of the working range is exceeded when one of the wheels is traveling greater than 16 km/hr. If either of these conditions exist the control proceeds to block 509 where the inner and outer brakes are released, if previously applied. Otherwise control continues to block 512. The lower limit is only considered if the control is currently not regulating a slip condition. Further, the upper limit of the working range represents the maximum vehicle speed in second gear. However, it is noted that the working range is dependent upon the particular application of the vehicle. Thus, the working range is not limited to the illustrated values.

Block 512 represents a testing block that allows the vehicle operator to test the operation of the wheel slip control. A two position switch may be used to initiate the test. For example the control passes to block 515 to set a desired speed ratio to a value of "1" when the switch is set to the first position. A desired speed ratio of "1" represents that the inner and outer wheels are rotating at the same speed. This condition represents no apparent vehicle articulation. Thus the operator can diagnose problems occurring with the wheel slip control by observing the vehicle braking, while the operator controls the vehicle articulation. For example, when the vehicle is articulating the control detects the speed differential between the outer wheel and inner wheel (representing an apparent slip condition); consequently, the brakes are applied to the faster rotating wheel. The function of the testing block will become more apparent from a further reading of the disclosure.

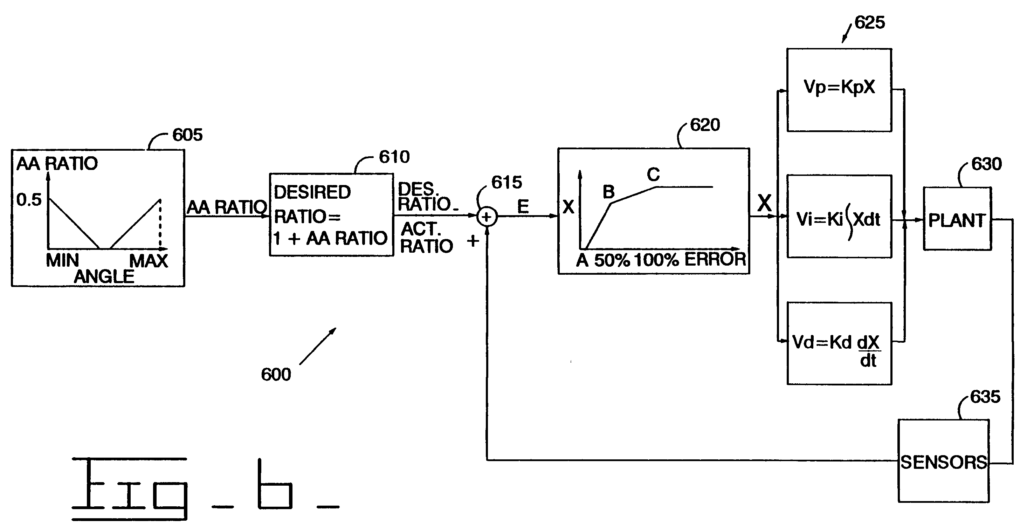

Assuming the switch be set to the "off" position control passes to block 518, where the desired speed ratio is calculated. The desired speed ratio represents an ideal speed differential between the outer and inner wheels. The desired speed ratio is responsive to the vehicle articulation angle. For example, the desired speed ratio is defined as the ratio of the outer wheel speed to the inner wheel speed. This calculation is best described with reference to FIG. 6. The table shown at block 605 is a two dimensional look-up table found in RAM. The table represents various values of an aa ratio (articulation angle ratio) corresponding to various vehicle articulation angle values. In the present example, the aa ratio may have values between 0.0 and 0.5. The max and min values represent the maximum/minimum amount of vehicle articulation as measured from the horizontal axis or vehicle center position. For example, the max and min values represent +/- 35°. As shown the center position displays a predetermined amount of "dead band". The aa ratio is determined in response to the vehicle articulation angle. The aa ratio aids in calculating the desired speed ratio, as shown by block 610.

Adverting back to FIG. 5, an actual speed ratio is calculated at block 521. In the second embodiment of the present invention, the slip signal is represented by the actual speed ratio. The actual speed ratio includes two values, one value representing the ratio of: the speed of the faster rotating wheel to the speed of the slower rotating wheel. The other value, S, represents the faster rotating wheel, e.g. the inner or outer wheel. As shown in FIG. 6 at block 635, the actual speed ratio is provided as feedback to the system.

As shown by block 524 an error value is produced. The error value is the difference between the desired speed ratio and the actual speed ratio, represented by a summing junction 615 of FIG. 6.

At block 527 the control determines if the vehicle is articulating at too great a rate. For example, if the vehicle is articulating at a rate greater than 22 degrees/second then the vehicle brakes are held at the previous pressure level, as shown by block 530. Otherwise the control continues to block 533.

At block 533, the error value is compared to a first predetermined reference value. If the error value is less than the first predetermined reference value, control proceeds to block 545. Otherwise the error value, E, is adjusted shown in the rate limiter block 620 of FIG. 6. The rate limiter block 620 functions to limit the rate of error. The rate limiter block represents a two dimensional look-up table found in RAM including values of the adjusted error value, X, corresponding values representing the percentage of error. Based on the percentage of error, the wheel slip control determines the adjusted error value, X. As apparent from this discussion, the value of the modified slip signal is the adjusted error value. The value "A" represents the first predetermined reference value, for example 2% error, "B" represents a 50% error and "C" represents a 100% error. The adjusted error value determined in block 620 allows the wheel slip control to regulate the application of the brake in a smooth manner to eliminate "jerking" or "pulsating".

Assuming that the error value is greater than the first predetermined reference value and the above adjustments have been made, control passes to block 536. Block 536 functions to allow the braking mechanism to achieve sufficient hydraulic fluid pressure before attempting to apply the braking forces. This is accomplished by energizing the respective electrohydraulic value to fill the associated braking mechanism with pressurized fluid. Filling the braking mechanism substantially removes any time lag between the moment that the braking control signal is issued and the moment in which the brake is applied. Typically, the valve is energized for a time period of 100 m.s. to achieve a desirable fluid pressure. It should be apparent that once braking has initiated there is no need to pre-fill the braking mechanism. Control then continues to block 542 where braking forces are applied to the faster rotating or slipping wheel utilizing PID (Proportional + Integral + Derivative) control.

The microprocessor 205 determines the proper braking force to apply to the faster rotating wheel using the PID control. The PID block is found at block 625 of FIG. 6. The PID control is represented by the equation, $V = V_p + V_i + V_d$. The result, V, is converted to a command signal that is delivered to block 630 enabling the electrohydraulic valve to produce the desired result. The values of the constants $K_p$, $K_i$ and $K_d$ are determined from simulation and analysis of empirical data in response to under footing conditions, vehicle dynamics, type of work performed by the vehicle, etc. For example, the values of the constants $K_p$, $K_i$ and $K_d$ may be 1.0, 0.5 and 1.0, respectively. It will be readily apparent to those skilled in the art that the PID constant values may be a wide range of numerical values depending on the desired gain of the feedback system.

In response to the adjusted error value, X, the PID control calculates the braking forces necessary to reduce the error to the first predetermined reference value. For example, the PID control produces a command signal, $I_c$, that is representative of the desired braking force to be applied to the slipping wheel.

Additionally, an energy management scheme may be employed. Advantageously, the energy management scheme limits the braking force to reduce the heat generated by the application of the brake. Limiting the braking force reduces brake fatigue, thus extending the lifetime of the brake. The energy management scheme limits the bias ratio to a desired value within a range of 1.2 to 1.8, for example. The bias ratio is defined as: the torque of the non-slipping wheel to the torque of the slipping wheel.

The wheel slip control determines a management signal, $I_m$, in response to values representing an average wheel speed and a desired bias ratio. The average wheel speed is calculated by the equation:

(inner wheel speed + outer wheel speed) / 2

The microprocessor 205 may use a three-dimensional look-up table or the like, provided in RAM to determine the management signal. The look-up table may be produced from values determined from simulation and analysis of empirical data. The microprocessor 205 may then compare the calculated values with those found in the look-up table to arrive at the management signal.

Once the management signal has been determined, the control compares the magnitude of the management signal to that of the command signal, as shown in FIG. 7 at block 705. If the command signal is greater than the management signal, then the braking control signal, $I_s$, is set to the value of magnitude of the management signal. Otherwise, the braking control signal is set to the value of the command signal. The braking control signal, $I_s$, is written to the respective valve driver to initiate the desired braking force, shown at block 551.

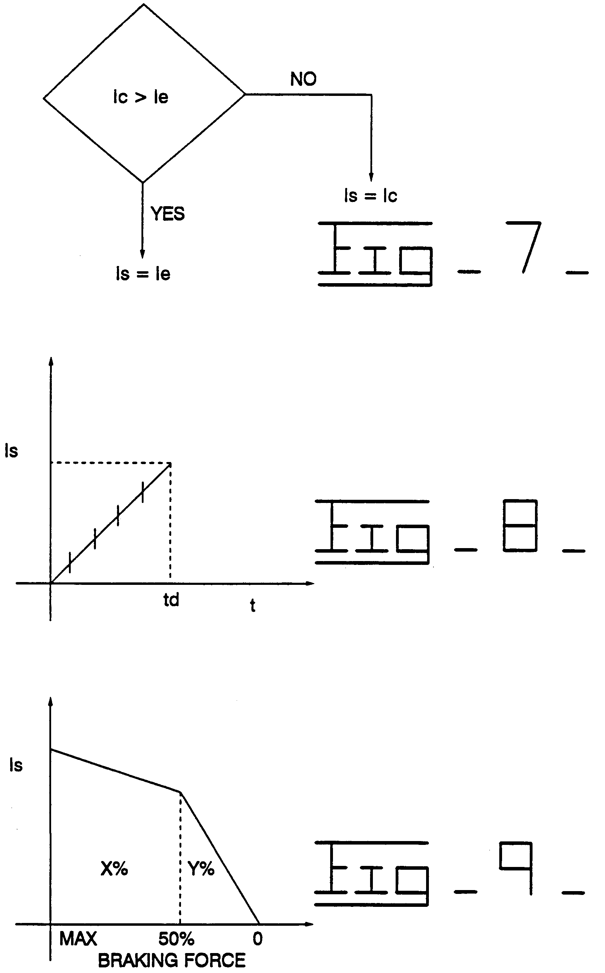

FIG. 8 illustrates the magnitude of the braking control signal, $I_s$, with respect to time. The response time, $t_d$, is the time elapsed from a zero braking force to a final braking force. Advantageously, the microprocessor 205 applies the braking force to the faster rotating or slipping wheel in an incremental fashion. This allows for a smooth transition from the initial braking force to the final braking force. For example at each loop of the control, the microprocessor 205 causes the braking force to increase an incremental or calculated amount over the previous value. As previously discussed, the calculated amount is determined by the PID control. The increments are shown by the "hatching" along the curve of FIG. 8. Thus, the microprocessor 205 produces the braking signal, $I_s$, with an increasing magnitude at each loop of the control to regulate the slip of the slipping wheel.

Adverting back to block 545 of FIG. 5, it is desired to reduce the amount of braking force to the slipping wheel. First, the control determines if the brake is completely disengaged. If not, control passes to block 548. This block is best shown in relation to FIG. 9. As shown the brake pressure is released in a "two-tier" fashion. At each loop of the control, the microprocessor 205 produces the braking control signal, $I_s$, with decreasing magnitude of a predetermined amount. For example, the braking force is incrementally reduced from the maximum force to 50% maximum force by X% of the previous value. The braking force is then incrementally reduced from 50% maximum force to zero force by Y% of the previous value. For example the values of percent reduction of X and Y may be 4% and 7%, respectively. It should be noted that the illustrated values are for exemplary purposes only, and the actual values used may vary depending on the desired reduction in braking force.

The present invention is well suited toward regulating the wheel slip of an articulated vehicle such as a wheel loader, for example, a wheel loader provided by Caterpillar, Inc. as model no. 966F. It will however, be apparent to those skilled in the art that the present invention is not limited to a wheel loader, as the present invention is well suited to many other types of articulated vehicles.

To best illustrate the first embodiment of the present invention, an example will be discussed in accordance with the flowchart of FIG. 3.

Firstly, the control reads the individual wheel speeds. The control then compares the rotational speed of each axle set to each other. Assuming the speeds associated with each axle set to be within a predetermined range of each other, the control calculates a slip signal value for each axle. Additionally, the control measures the articulation angle and adjusts the slip signal value accordingly. For example, after adjusting for the articulation angle and if one axle set has a slip signal value greater than the first predetermined reference value the control continues. Then the control calculates the brake pressure level, associated with band 5, and correspondingly the braking forces are applied to the faster turning wheel.

The control continues, reading the wheel speeds and making the associated comparisons. After which, the control again calculates the slip signal and adjusts the slip signal value, if needed, based on the articulation angle of the vehicle. For instance, assume that the slip signal value for each axle set corresponds to a value of 2.3, for example. The one axle set previously associated with a slip signal value corresponding to band 5 will sequence though the lower bands 4-1, producing a smooth transition back to the uncontrolled mode in which the brakes are fully released. The other axle set will not enter the slip control because the associated slip signal value does not exceed the first predetermined reference value.

The wheel slip control of second embodiment of the present invention, as apparent from the flowchart of FIG. 5, reads the individual wheel speeds, calculates a desired wheel speed ratio and an actual wheel speed ratio. Based on feedback control, an error value is determined. In response to the magnitude of the error value, the control determines the positive or negative braking forces to equalize the torque on the respective wheel set. The brake forces are incrementally modulated with each loop of the control for smooth transitions from the initial braking force to the final braking force.

One advantage of the second embodiment of the present invention pertains to the aspect of using PID feedback control. The $V_p$ term of the PID control leads to a proportional gain which provides for a fast response. The $V_i$ term of the PID control cancels any offset in error introduced by the $V_p$ term, thus providing for control stability. The $V_d$ term enhances the response characteristics of the control. Thus, the result provides for a wheel slip control which eliminates wheel slip quickly and without the undesirable effects of brake "pulsing". Thus, the PID control accurately determines the magnitude and the rate at which the braking force is to be applied.

As shown, the present invention is particularly suited to vehicles that are articulated and have two sets of axles for driving at least two wheels for each axle set. Moreover, the present invention measures the articulation angle of the vehicle and adjusts the slip signal value to accommodate for the normal wheel speed differential associated with each axle set during cornering. Consequently, this provides for an adaptive wheel speed control. Further, the anti-spin apparatus independently monitors wheel slip for each axle set, providing for efficient vehicle operation.

Other aspects, objects and advantages of the present invention can be obtained from a study of the drawings, the disclosure and the appended claims.

**Claims**

1. An anti-spin apparatus (100) for a vehicle, the vehicle having an horizontal axis (149), front and rear wheeled sections (138,139) hinged together by an articulation mechanism (130) for relative movement about the horizontal axis (149), and at least one axle set (118) with at least two driven wheels (101,103), comprising:

braking means (175) for controllably applying braking forces to each of said driven wheels (101,103);

means (145) for producing a slip signal having a value responsive to the difference in rotational velocity between said wheels (101,103) of said axle set (118); characterised by

means (163) for producing an articulation signal having a value responsive to the angle of articulation of said vehicle;

control means (170) for receiving laid slip signal and said articulation signal, controllably modifying said slip signal in response to the value of said articulation signal, comparing said modified slip signal with a first predetermined reference value, and producing a braking control signal in response to said modified slip signal value exceeding said first predetermined reference value; and

wherein said braking means (175) receives said braking control signal and controllably applies said braking forces to the faster rotating wheel (101,103) in response to said received signal.

2. An anti-spin apparatus (100), as set forth in claim 1, wherein the value of said slip signal includes:

a value representing the ratio of the faster rotating wheel to the slower rotating wheel; and

a value representing the faster rotating wheel (101,103).

3. An anti-spin apparatus (100), as set forth in claim 2, wherein said control means (170) determines a desired speed ratio signal having a value representative of a desired ratio of the faster rotating wheel to the slower rotating wheel in response to the magnitude of the articulation angle signal, the desired ratio having a value representative of substantially no wheel slippage.

4. An anti-spin apparatus (100), as set forth in claim 3, wherein said modified said slip signal includes an error value representative of the difference between the values of the slip and desired speed ratio signals.

5. An anti-spin apparatus (100), as set forth in claim 4, wherein the control means (170) determines a desired amount of braking force to apply to the faster rotating wheel using Proportional + Integral + Derivative (PID) control, said braking control signal having a magnitude proportional to the desired amount of braking force.

6. An anti-spin apparatus (100), as set forth in claim 1, wherein said vehicle includes at least one additional axle set (120) with at least two driven wheels (105,107), said slip signal producing means (145) including respective wheel speed transducers (150) connectable to each of said vehicle wheels (101,103,105,107) and adapted to produce respective signals having values responsive to the rotational velocity of each of said wheels (101,103,105,107).

7. An anti-spin apparatus (100), as set forth in claim 6, wherein said slip signal producing means (145) determines the difference in rotational velocity between the wheels (101,103,105,107) of each wheel set (118,120).

8. An anti-spin apparatus (100), as set forth in claim 7, wherein said braking means (175) controllably applies braking forces to the faster rotating wheel of each wheel set (118,120).

9. An anti-spin apparatus (100), as set forth in claim 8, wherein said braking means (175) applies said braking forces which are variably incrementally modulated in proportion to the difference in rotational speeds between the wheels (101,103,105,107) in response to the slip signal.

10. A method for controllably equalizing the torque delivered to an axle set (118) of a vehicle, the vehicle having front and rear wheeled sections (138,139) being hinged together by an articulation mechanism (130) for relative movement an horizontal axis (149), the axle set (118) having at least two driven wheels (101,103) where each of the wheels (101,103) have an associated braking mechanism (131,133), comprising the steps of:

producing a slip signal having a value responsive to the difference in rotational velocity between said wheels (101,103) of said axle set (118);

producing an articulation signal having a value responsive to the angle of articulation of said vehicle;

receiving said slip signal and said articulation signal, controllably modifying said slip signal in response to the value of said articulation signal, comparing said modified slip signal with a first predetermined reference value, and producing a braking control signal in response to said modified slip signal value exceeding said first predetermined reference value; and

receiving said braking control signal and controllably operating said braking mechanism (131,133) in response to said received signal.

11. A method, as set forth in claim 10, wherein the step of producing said slip signal includes the steps of:

calculating a value representing a ratio of the faster rotating wheel to the slower rotating wheel; and

determining a value that represents wheel (101,103) the faster rotating wheel.

12. A method, as set forth in claim 11, including the step of determining a desired speed ratio signal having a value representative of a desired ratio of the faster rotating wheel to the slower rotating wheel in response to the magnitude of the articulation angle signal, the desired ratio having a value representative of substantially no wheel slippage.

13. A method, as set forth in claim 12, wherein the step of modifying includes the steps of:

summing the value of the desired speed ratio signal with the value of the slip signal, said modified slip signal having an error value representative of the difference between the values of the slip and desired speed ratio signals.

14. A method, as set forth in claim 13, including the step of adjusting the error value in response to the magnitude of the error value.

15. A method, as set forth in claim 14, wherein the step of producing the braking control signal includes the step of determining a desired amount of braking force to apply to the faster rotating wheel using Proportional + Integral + Derivative (PID) control in response the adjusted error value, said braking control signal having a magnitude proportional to the desired amount of braking force.

**Patentansprüche**

1. Antischlupfvorrichtung (100) für ein Fahrzeug, wobei das Fahrzeug eine Horizontalachse (149), vordere und hintere Radabschnitte (138, 139), die gelenkmäßig durch einen Gelenkmechanismus (130) verbunden sind zur Relativbewegung um die Horizontalachse (149) und mindestens einen Achsensatz (118) besitzt, mit mindestens zwei angetriebenen bzw. Antriebsrädern (101, 103), wobei die Vorrichtung folgendes aufweist:
Bremsmittel (175) zum steuerbaren Anlegen von Bremskräften an jedes der Antriebsräder (101, 103);
Mittel (145) zum Vorsehen eines Schlupfsignals mit einem Wert ansprechend auf die Differenz der Drehgeschwindigkeit zwischen den Rädern (101, 103) des Achsensatzes (118); gekennzeichnet durch:
Mittel (163) zum Erzeugen eines Gelenksignals mit einem Wert ansprechend auf den Gelenkwinkel des Fahrzeugs;
Steuermittel (170) zum Empfangen des Schlupfsignals und des Gelenksignals, zum steuerbaren Modifizieren des Schlupfsignals ansprechend auf den Wert des Gelenksignals, zum Vergleichen des modifizierten Schlupfsignals mit einem ersten vorbestimmten Bezugswert und zum Erzeugen eines Bremssteuersignals darauf ansprechend, daß das modifizierte Schlupfsignal den ersten vorbestimmten Bezugswert übersteigt; und
wobei die Bremsmittel (175) das Bremssteuersignal empfangen und steuerbar die Bremskräfte an das sich schneller drehende Rad (101, 103) anlegen und zwar ansprechend auf das empfangene Signal.

2. Antischlupfvorrichtung (100) nach Anspruch 1, wobei der Wert des Schlupfsignals folgendes aufweist:
einen Wert, der das Verhältnis des sich schneller drehenden Rades zu dem sich langsamer drehenden Rad darstellt; und
ein Wert, der das sich schneller drehende Rad (101, 103) repräsentiert.

3. Antischlupfvorrichtung (100) nach Anspruch 2, wobei die Steuermittel (170) ein gewünschtes oder Soll-Geschwindigkeits- bzw. Drehzahlverhältnissignal mit einem Wert bestimmen, der ein Soll-Verhältnis des sich schneller drehenden Rades zu dem sich langsamer drehenden Rad darstellt und zwar ansprechend auf die Größe des Gelenkwinkelsignals, wobei das Soll-Verhältnis einen Wert besitzt, der im wesentlichen keinen Radschlupf darstellt.

4. Antischlupfvorrichtung (100) nach Anspruch 3, wobei das modifizierte Schlupfsignal einen Fehlerwert umfaßt, der die Differenz zwischen den Werten der Schlupf- und Solldrehzahlverhältnissignale darstellt.

5. Antischlupfvorrichtung (100) nach Anspruch 4, wobei die Steuermittel (170) eine Soll-Bremskraftgröße zum Anlegen an das sich schneller drehende Rad bestimmen unter Verwendung einer Proportional- + Integral- + Diffential-(PID) Steuerung, wobei das Bremssteuersignal eine Größe proportional zu der gewünschten bzw. Soll-Bremskraftgröße besitzt.

6. Antischlupfvorrichtung (100) nach Anspruch 1, wobei das Fahrzeug mindestens einen zusätzlichen Axensatz (120) mit mindestens zwei Antriebsrädern (105, 107) aufweist, wobei die Schlupfsignalerzeugungsmittel (145) jeweilige Raddrehzahlwandler (150) aufweisen, die mit jedem der Fahrzeugräder (101, 103, 105, 107) verbindbar sind und die in der Lage sind, jeweilige Signale mit Werten ansprechend auf die Drehgeschwindigkeit bzw. Drehzahl von jedem der Räder (101, 103, 105, 107) zu erzeugen.

7. Antischlupfvorrichtung (100) nach Anspruch 6, wobei die Schlupfsignalerzeugungsmittel (145) die Differenz der Drehzahl zwischen den Rädern (101, 103, 105, 107) jedes Radsatzes (118, 120) bestimmen.

8. Antischlupfvorrichtung (100) nach Anspruch 7, wobei die Bremsmittel (175) steuerbar Bremskräfte an das sich schneller drehende Rad jedes Radsatzes (118, 120) anlegen.

9. Antischlupfvorrichtung (100) nach Anspruch 8, wobei die Bremsmittel (175) die Bremskräfte anlegen, die variabel schrittweise bzw. inkremental moduliert werden und zwar proportional zu der Differenz der Drehzahlen zwischen den Rädern (101, 103, 105, 107) und zwar ansprechend auf das Schlupfsignal.

10. Verfahren zum steuerbaren Ausgleichen des Drehmoments, das an einen Achsensatz (118) eines Fahrzeugs geliefert wird, wobei das Fahrzeug vordere und hintere Radabschnitte (138, 139) besitzt, die gelenkmäßig miteinander durch einen Gelenkmechanismus (130) verbunden sind zur Relativbewegung, um eine Horizontalachse (149), wobei der Achsensatz (118) mindestens zwei angetriebene bzw. Antriebsräder (101, 103) aufweist, wobei jedes der Räder (101, 103) einen assozierten Bremsmechanismus (131, 133) besitzt, wobei das Verfahren die folgenden Schritte aufweist: Erzeugen eines Schlupfsignals mit einem Wert ansprechend auf die Differenz der Drehgeschwindigkeit bzw. Drehzahl zwischen den Rädern (101, 103) des Achsensatzes (118);

Erzeugen eines Gelenkssignals mit einem Wert ansprechend auf den Gelenkwinkel des Fahrzeugs; Empfangen des Schlupfsignals und des Gelenksignals, steuerbares Modifizieren des Schlupfsignals ansprechend auf den Wert des Gelenksignals, Vergleichen des modifizierten Schlupfsignals mit einem ersten vorbestimmten Bezugswert, und Erzeugen eines Bremssteuersignals darauf ansprechend, daß der modifizierte Schlupfsignalwert den ersten vorbestimmten Bezugswert übersteigt; und Empfangen des Bremssteuersignals und steuerbares Betätigen des Bremsmechanismus (131, 133) ansprechend auf das empfangene Signal.

11. Verfahren nach Anspruch 10, wobei der Schritt des Erzeugens des Schlupfsignals die folgenden Schritte aufweist:
Berechnen eines Werts, der ein Verhältnis des sich schneller drehenden Rades zu dem sich langsamer drehenden Rad darstellt; und
Bestimmen eines Werts, der das sich schneller drehende Rad (101, 103) darstellt.

12. Verfahren nach Anspruch 11, wobei das Verfahren den folgenden Schritt aufweist:
Bestimmen eines gewünschten bzw. Soll-Drehzahlverhältnissignals mit einem Wert ansprechend auf ein Sollverhältnis des sich schneller drehenden Rades zu dem sich langsamer drehenden Rad und zwar ansprechend auf die Größe des Gelenkwinkelsignals, wobei das Soll-Verhältnis einen Wert besitzt, der im wesentlichen keinen Radschlupf darstellt.

13. Verfahren nach Anspruch 12, wobei der Schritt des Modifizierens die folgenden Schritte aufweist: Summieren des Wertes des Soll-Drehzahlverhältnissignals mit dem Wert des Schlupfsignals, wobei das modifizierte Schlupfsignal einen Fehlerwert besitzt, der die Differenz zwischen den Werten der Schlupf- und Soll- Drehzahlverhältnissignale darstellt.

14. Verfahren nach Anspruch 13, wobei das Verfahren den Schritt des Einstellens des Fehlerwerts ansprechend auf die Größe des Fehlerwerts aufweist.

15. Verfahren nach Anspruch 14, wobei der Schritt des Erzeugens des Bremssteuersignals den folgenden Schritt aufweist:
Bestimmen einer gewünschten bzw. Soll-Bremskraftgröße zum Anlegen an das sich schneller drehende Rad unter Verwendung einer Proportional- + Integral- + Differential- (PID) Steuerung ansprechend auf den eingestellten Fehlerwert, wobei das Bremssteuersignal eine Größe besitzt, die proportional zu der Soll-Bremskraftgröße ist.

## Revendications

1. Système anti-patinage (100) pour un véhicule, ce véhicule ayant un axe horizontal (149), des parties avant et arrière munies de roues (138, 139) articulées l'une à l'autre par un mécanisme d'articulation (130) pour un mouvement relatif par rapport à l'axe horizontal (149) et au moins un ensemble d'axes (118) munis d'au moins deux roues entraînées (101, 103), comprenant :
des moyens de freinage (175) pour appliquer de façon contrôlable des forces de freinage à chacune des roues entraînées (101, 103) ;
des moyens (145) de production d'un signal de patinage ayant une valeur qui correspond à la différence de vitesse de rotation entre les roues (101, 103) de l'ensemble d'axes (118) ;
caractérisé par :
des moyens (163) pour produire un signal d'articulation ayant une valeur qui correspond à l'angle d'articulation du véhicule ;
des moyens de commande (170) pour recevoir le signal de patinage et le signal d'articulation, pour modifier de façon contrôlable le signal de patinage en réponse à la valeur du signal d'articulation, pour comparer le signal de patinage modifié à une première valeur de référence prédéterminée et pour produire un signal de commande de freinage en réponse au fait que la valeur du signal de patinage modifié dépasse la première valeur de référence prédéterminée ; et
dans lequel les moyens de freinage (175) reçoivent le signal de commande de freinage et appliquent de façon contrôlable les forces de freinage à la roue qui tourne le plus rapidement (101, 103) en réponse au signal reçu.

2. Système anti-patinage (100) selon la revendication 1, dans lequel la valeur du signal de patinage comprend :
une valeur représentant le rapport entre la roue tournant le plus vite et la roue tournant le plus lentement, et
une valeur représentant la roue tournant le plus vite (101, 103).

3. Système anti-patinage (100) selon la revendication 2, dans lequel les moyens de commande (170) déterminent un signal de rapport de vitesse désiré ayant une valeur représentative d'un rapport désiré entre la roue tournant le plus vite et la roue tournant le plus lentement en réponse à la valeur du signal d'angle d'articulation, le rapport désiré ayant une valeur représentative d'une quasi-absence de patinage de roue.

4. Système anti-patinage (100) selon la revendication 3, dans lequel le signal de patinage modifié comprend une valeur d'erreur représentative de la différence entre les valeurs des signaux de rapport de vitesse de patinage et de rapport de vitesse désiré.

5. Système anti-patinage (100) selon la revendication 4, dans lequel les moyens de commande (170) déterminent une quantité désirée de force de freinage à appliquer à la roue tournant le plus vite en utilisant une commande proportionnelle/intégrale/dérivée (PID), le signal de commande de freinage ayant une amplitude proportionnelle à la quantité désirée de force de freinage.

6. Système anti-patinage (100) selon la revendication 1, dans lequel le véhicule comprend au moins un ensemble d'axes supplémentaires (120) muni d'au moins deux roues entraînées (105, 107), les moyens de production de signal de patinage (145) comprenant des transducteurs respectifs (150) de vitesse de roue pouvant être connectés à chacune des roues du véhicule (101, 103, 105, 107) et adaptés à produire des signaux respectifs ayant des valeurs correspondant à la vitesse de rotation de chacune des roues (101, 103, 105, 107).

7. Système anti-patinage (100) selon la revendication 6, dans lequel les moyens de production de signal de patinage (145) déterminent la différence de vitesse de rotation entre les roues (101, 103, 105, 107) de chaque ensemble de roues (118, 120).

8. Système anti-patinage (100) selon la revendication 7, dans lequel les moyens de freinage (175) appliquent de façon contrôlable des forces de freinage à la roue tournant le plus vite de chaque ensemble de roues (118, 120).

9. Système anti-patinage (100) selon la revendication 8, dans lequel les moyens de freinage (175) appliquent les forces de freinage qui sont modulées de façon incrémentiellement variable proportionnellement à la différence de vitesse de rotation entre les roues (101, 103, 105, 107) en réponse au signal de patinage.

10. Procédé pour égaliser de façon contrôlable le couple fourni à un ensemble d'axes (118) d'un véhicule, le véhicule ayant des parties à roues avant et arrière (138, 139) articulées l'une à l'autre par un mécanisme d'articulation (130) pour un mouvement relatif par rapport à un axe horizontal (149), l'ensemble d'axes (118) étant muni d'au moins deux roues entraînées (101, 103), chacune des roues (101, 103) étant associée à un mécanisme de freinage (131, 133), comprenant les étapes suivantes :
produire un signal de patinage ayant une valeur correspondant à la différence de vitesse de rotation entre les roues (101, 103) de l'ensemble d'axes (118) ;
produire un signal d'articulation ayant une valeur qui correspond à l'angle d'articulation du véhicule ;
recevoir le signal de patinage et le signal d'articulation, modifier de façon contrôlable le signal de patinage en réponse à la valeur du signal d'articulation, comparer le signal de patinage modifié à une première valeur de référence prédéterminée, et produire un signal de commande de freinage en réponse au fait que la valeur du signal de patinage modifié dépasse la première valeur de référence prédéterminée ; et
recevoir le signal de commande de freinage et actionner de façon contrôlable le mécanisme de freinage (131, 133) en réponse au signal reçu.

11. Procédé selon la revendication 10, dans lequel l'étape de production du signal de patinage comprend les étapes suivantes :
calculer une valeur représentant un rapport entre la roue tournant le plus vite et la roue tournant le plus lentement ; et
déterminer une valeur qui représente la roue (101, 103) qui tourne le plus vite.

12. Procédé selon la revendication 11, comprenant l'étape consistant à déterminer un signal de rapport de vitesse désiré ayant une valeur représentative d'un rapport désiré entre la roue tournant le plus vite et la roue tournant le plus lentement en réponse à l'amplitude du signal d'angle d'articulation, le rapport désiré ayant une valeur représentative d'une quasi-absence de patinage de roue.

13. Procédé selon la revendication 12, dans lequel l'étape de modification comprend l'étape consistant à sommer la valeur du signal de rapport de vitesse désiré et la valeur du signal de patinage, le signal de patinage modifié ayant une valeur d'erreur représentative de la différence entre les valeurs des signaux de rapport de vitesse de patinage et de rapport de vitesse désiré.

14. Procédé selon la revendication 13, comportant l'étape consistant à régler la valeur d'erreur en réponse à l'amplitude de la valeur d'erreur.

15. Procédé selon la revendication 14, dans lequel l'étape de production d'un signal de commande de freinage inclut l'étape consistant à déterminer une quantité désirée de force de freinage à appliquer à la roue tournant le plus vite en utilisant une commande proportionnelle/intégrale/dérivée (PID), le signal de commande de freinage ayant une amplitude proportionnelle à la quantité désirée de force de freinage.

Fig_2_

Fig_4_

READ WHEEL
SPEEDS
⌒ 340

READ WHEEL
SPEEDS
⌒ 300

COMPARE SPEEDS OF
BOTH AXLE SETS
⌒ 345

COMPARE SPEEDS OF
BOTH AXLE SETS
⌒ 305

CALCULATE
SLIP SIGNAL
⌒ 350

STOP

CALCULATE
SLIP SIGNAL
⌒ 310

STOP

VEHICLE
ARTICULATED?
⌒ 355

VEHICLE
ARTICULATED?
⌒ 315

CORRECT SIGNAL FOR
TURING RADIUS
⌒ 360

CORRECT SIGNAL FOR
TURING RADIUS
⌒ 320

CALCULATE BAND
⌒ 365

CALCULATE BAND
⌒ 325

BAND 4 OR 5?
⌒ 370

BAND 5?
⌒ 330

CALCULATE
BRAKE LEVEL
⌒ 380

CALCULATE
BRAKE LEVEL
⌒ 375

CALCULATE
BRAKE LEVEL
⌒ 335

BRAKES FULLY
RELEASED?
⌒ 385

Fig _ 3 _

READ WHEEL SPEEDS/
ARTICULATION ANGLE — 501

RELEASE
BRAKES — 509 ← NO — WORKING RANGE ? — 503

YES

TEST
MODE ? — 512

YES — NO

SET DES RATIO = 1 — 515

CALCULATE
DES RATIO — 518

CALCULATE
ACT RATIO,S — 521

ERROR=ACT RATIO
DES RATIO — 524

ARTICULATING
TOO FAST ? — 527

YES

HOLD
BRAKES — 530

APPLY
BRAKE ?
(E>A) — 533 — NO

YES

PRE-FILL
BRAKE — 536

IS
BRAKE
DISENGAGED ? — 545 — YES

YES — 542

NO — 548

INCREASE BRAKING
BY PID

REDUCE BRAKING

WRITE TO DRIVER — 551

500

Fig_5_

**Fig-6**

Ic > Ie

NO

YES

Is = Ic

Is = Ie

Fig _ 7 _

Is

td    t

Fig _ 8 _

Is

X%    Y%

MAX    50%    0

BRAKING FORCE

Fig _ 9 _